# EUROPÄISCHE PATENTANMELDUNG

(11) **EP 0 534 928 A1**
(43) Veröffentlichungstag der Anmeldung: **31.03.1993**
(21) Anmeldenummer: 92890197.4
(22) Anmeldetag: 21.09.1992
(51) Int. Cl.: B62H 3/10

(54) **Vorrichtung zur Sicherung von Fahrrädern**

(30) Priorität: 23.09.1991 AT 1909/91; 23.07.1992 AT 1508/92; 23.07.1992 AT 1507/92
(71) Anmelder: PATENTE MARKEN LIZENZEN Verwaltungs- und Verwertungs-Gesellschaft m.b.H., A-8700 Leoben (AT)
(72) Erfinder: Ramaseder, Norbert, Dipl.-Ing., A-4020 Linz (AT)

(57) **Zusammenfassung**

Eine Vorrichtung zur Sicherung von Fahrrädern auf dafür vorgesehenen Abstellflächen (4), die aus einer Haltestange (6) besteht, die mit ihrem einen Ende gelenkig mit einer fest auf der Abstellfläche verankerten Aufnahme (8) oder einem Rahmen verbunden ist und deren gegenüberliegendes Ende mit einem versperrbaren Sicherungselement (9) versehen ist, soll diebstahlsicher ausgestaltet werden, sodaß die wertvollsten Teile des Fahrrades nur mit großem Aufwand entfernt werden können.

Dazu wird vorgeschlagen, die gelenkige Verbindung zwischen Haltestange (6) und Aufnahme (8) im Nahbereich der Abstellfläche (4) oder einem Rahmen anzuordnen, die Haltestange (6) längenveränderbar auszubilden und das Sicherungselement (9) gelenkig mit der Haltestange (6) zu verbinden.

## Beschreibung

Die Erfindung betrifft eine Vorrichtung zur Sicherung von Fahrrädern und fahrradähnlichen einspurigen Fahrzeugen auf dafür vorgesehenen Abstellflächen in einer Parkposition mit einer Haltestange, die mit ihrem einen Ende gelenkig mit einer fest auf der Abstellfläche verankerten Aufnahme verbunden ist und deren gegenüberliegendes Ende mit einem versperrbaren Sicherungselement versehen ist.

Durch staubedingte Abnahme der durchschnittlichen Fahrgeschwindigkeit der Automobile, durch Schärfung des Umweltbewußtseins der Bevölkerung und den allmählichen Rückbau der Verkehrswege zu verkehrsberuhigten Zonen im städtischen Bereich sowie eine Zunahme der Freizeitaktivitäten der Bevölkerung ist es zu einer Renaissance des Fahrrades gekommen. Das Fahrrad hat nicht zuletzt aufgrund seines hohen technischen Standards einen Anschaffungspreis und eine Bedeutung erreicht, der es auch in steigendem Maße zum Gegenstand von Diebstählen werden läßt. Sowohl bei kurzen Fahrten zur Arbeitsstelle, bei Einkaufsfahrten als auch im Bereich des Fahrradtourismus ist es notwenig, das Fahrrad zeitweilig unbeaufsichtigt zu lassen, wobei die an den Fahrrädern serienmäßig angebrachten Sicherungssysteme, zumeist ein in die Speichen des Hinterrades eingreifender Riegel, aber auch die bekannten, aus einem Seilstück und einem Nummernschloß bestehenden Fahrradsicherungen nicht ausreichen, einem Diebstahl vorzubeugen. Meist genügt eine starke Zange, um die Sperre zu durchtrennen. Es werden in nächster Zeit in zunehmendem Maße von den Tourismusorganisationen Abstellflächen für Fahrräder bereitgestellt werden, die eine entsprechend komfortable, auf die Bedürfnisse des Fahrradtouristen abgestimmte Ausstattung aufweisen.

Aus dem amerikanischen Patent 3,934,436 ist bereits eine Diebstahlsicherung bekannt, die aus einer vertikalen Säule besteht, die eine um die Längsachse der Säule schwenkbare, mit einem versperrbaren Sicherungselement versehene Haltestange trägt. Zusätzlich wird das Fahrrad durch ein aus der Säule ausziehbares und um die Räder und den Fahrradrahmen schlingbares Seil gesichert, das ebenfalls mit dem der Haltestange zugeordneten Sicherungselement fixiert wird. Wegen des unterschiedlichen Rahmenaufbaues für Damen- und Herrenfahrräder sind bei dieser Konstruktion getrennte Parkstationen für Damen- und Herrenfahrräder notwendig. Um Fahrräder unterschiedlicher Rahmenhöhe abzustellen und sichern zu können, muß die Haltestange vertikal verschoben werden können, wobei besondere Anforderungen an die Gleitführung der Haltestange entlang der Aufnahme gestellt werden müssen. Ist das Spiel zu klein, ist die Gängigkeit behindert und es kommt zum schnellen Einrosten der Führung; ist das Spiel zu groß, verkantet der Haltearm durch das Eigengewicht oder er fällt nach unten oder es besteht die Gefahr für den Benützer, sich die Finger einzuklemmen. Diese Konstruktion ist daher äußerst störungsanfällig und verletzungsgefährdend.

Aus der WO-OS 90/11206 ist bereits ein für die Montage auf Fahrzeugdächern vorgesehener Fahrradständer bekannt, der auch ein versperrbares Sicherungselement für den Fahrradrahmen aufweist. Nachteilig bei diesem Vorschlag ist die besonderes Geschick und erhebliche Kräfte des Benutzers erfordernde Handhabung. Das Fahrrad muß nach dem Hochheben mit beiden Rädern in die Aufnahmeschiene abgestellt werden und gleichzeitig die Haltestange angehoben und der Rahmen in das versperrbare Sicherungselement eingefädelt werden. Durch die auf einer Kreisbahn bewegbaren Haltestange ist eine Fixierung des Fahrrades, wenn es bereits mit den Rädern in die Aufnahmeschiene eingebracht ist, wegen der Behinderung durch die Pedale nicht mehr möglich. Es muß zur Klemmung zumindest einseitig hochgehoben und gegebenenfalls auch geneigt werden, insofern dieses Neigen nicht durch weitere Fahrräder behindert ist. Wegen der erhöhten Position am Autodach ist die Handhabung jedoch anders gelagert.

Demgegenüber ist es die Aufgabe der Erfindung, diese Nachteile zu vermeiden und eine einfache betriebssichere Vorrichtung zur Diebstahlsicherung zu schaffen, die es ermöglicht, die wertvollsten Teile des Fahrrades, insbesondere jedoch den Fahrradrahmen solcherart zu sichern, daß es für den potentiellen Dieb sehr schwer wird, ohne größere Hilfsmittel die Sperre zu durchbrechen. Gleichermaßen soll ein komfortables, äußerst benutzerfreundliches System vorgeschlagen werden, das von jedermann, auch von Kindern und älteren Leuten, leicht bedient werden kann. Auch dem zunehmenden Vandalismus im städtischen Bereich sollte dieses Sicherungssystem widerstehen.

Weiters ist es Aufgabe der Erfindung, das Sicherungselement so auszubilden, daß es nicht nur gegen gewaltsame Öffnungsversuche und Vandalismus Widerstand leistet, es soll auch bei tatsächlichem oder behauptetem Schlüsselverlust in einer besonders komfortablen Ausführungsform die Identifizierung des tatsächlichen Fahrradbesitzers ermöglichen.

Gelöst wird diese Aufgabe dadurch, daß die gelenkige Verbindung zwischen Haltestange und Aufnahme im Nahbereich der Stellfläche angeordnet ist, daß die Haltestange längenveränderbar ausgebildet ist und daß das Sicherungselement gelenkig mit der Haltestange verbunden ist.

Wenn das Fahrrad in die vorbezeichnete Parkposition gebracht ist, soll die Fixierung des Fahrradrahmens an der Haltestange mit dem Sicherungselement möglich sein, ohne das Fahrrad zur Seite schwenken zu müssen, wie dies beispielsweise bei auf Autodächern angebrachten Fahrradständern der Fall ist. Dies wird ermöglicht, indem die Schwenkachse der Gelenkverbindung zwischen Aufnahme und Haltestange schräg zur Parkposition des Fahrrades angeordnet ist. Vorteilhaft beträgt der Winkel zwischen Parkposition und Schwenkachse 70° bis 85°.

Die Längenveränderbarkeit der Haltestange wird in besonders einfacher Art durch Ausbildung als Teleskop erreicht.

Eine ebenfalls der Aufgabenstellung genügende Ausführungsform ist dadurch gekennzeichnet, daß die gelenkige Verbindung zwischen Haltestange und Aufnahme im Nahbereich der Abstellfläche angeordnet ist, daß die Haltestange in der Aufnahme parallel zur Parkposition verschiebbar und quer zur Parkposition verschwenkbar ist und daß das Sicherungselement gelenkig mit der Haltestange verbunden ist.

Die gelenkige Verbindung zwischen Haltestange und Aufnahme besteht vorteilhaft aus der im Gehäuse gelagerten parallel zur Parkposition liegenden Welle und der an der Welle längsverschiebbaren Führungsbuchse der Haltestange und mindestens einer zwischen dem Gehäuse und der Welle bzw. dem Gehäuse und der Führungsbuchse wirkenden Feder.

Um zu verhindern, daß von abgestellten Fahrrädern die Räder gestohlen werden, ist vorgesehen, daß die Haltestange mit einem Verschiebeelement gelenkig verbunden ist, das mit mindestens einem Klemmbügel zur Sicherung mindestens eines Rades des Fahrrades zusammenwirkt.

Vorteilhaft wird das dadurch gelöst, daß das Verschiebeelement mindestens einen Klemmschuh trägt, der mit einer Freistellung am Klemmbügel in Verbindung bringbar ist.

Die zusätzliche Sicherung der Räder erfolgt vorteilhaft dadurch, daß ein Klemmbügel zur Fixierung eines Rades des Fahrrades in seiner Lage zur Parkposition des Fahrrades festliegt, der zweite auf das zweite Rad des Fahrrades wirkende Klemmbügel im Abstand zum ersten Klemmbügel verschiebbar angeordnet ist.

Um unterschiedlichen Radständen zu genügen, ist es auch möglich, daß ein Klemmbügel zur Fixierung eines Rades des Fahrrades in seiner Lage zur Parkposition des Fahrrades festliegt und eine Gruppe von Klemmbügeln im Abstand zum ersten Klemmbügel angeordnet ist, wobei ein ausgewählter, dem Radstand entsprechender Klemmbügel mit einem der Klemmschuhe zusammenwirkt.

Nach einer weiteren Ausführungsform, bei der der Fahrradständer keine unlösbare Verbindung mit dem Untergrund aufweist, wird die Aufgabe dadurch gelöst, daß die Haltestange längenveränderbar ausgebildet und das Sicherungselement gelenkig mit der Haltestange verbunden ist.

Wenn das Fahrrad in die Abstellposition gebracht ist, soll die Fixierung des Fahrradrahmens an der Haltestange mit dem Sicherungselement auch in diesem Fall möglich sein, ohne das Fahrrad zur Seite schwenken zu müssen, wie dies beispielsweise bei auf Autodächern angebrachten Fahrradständern der Fall ist. Dies wird ermöglicht, indem die Schwenkachse der Haltestange im wesentlichen parallel zur Längserstreckung der Längselemente des Rahmens oder nach einer weiteren Ausführungsform schräg zur Längserstreckung verläuft. Vorteilhaft beträgt der Winkel zwischen der Schwenkachse und der Richtung der Längserstreckung der Längselemente 70° bis 85°.

Eine besonders benutzerfreundliche und stabile Ausbildung des Sicherungselementes wird dadurch erreicht, daß das Sicherungselement von einem im wesentlichen U-förmigen Fahrradrahmenaufnehmer und einem die U-förmige Öffnung des Fahrradrahmenaufnehmers verschließenden Schloßbolzen gebildet wird.

Um das Herausschlagen des Schloßbolzens aus dem Fahrradrahmenaufnehmer mit einem Hammer unmöglich zu machen, durchsetzt der Schloßbolzen einen Schenkel des U-förmigen Fahrradrahmenaufnehmers zur Gänze und ragt in ein Sackloch des zweiten Schenkels des U-förmigen Fahrradaufnehmers hinein.

Im versperrten Zustand wird das Schloß vor Manipulationen geschützt, indem der Sperriegel des in den Schloßbolzen integrierten Schlosses in eine im wesentlichen mittig in der Mantelfläche der Durchgangsbohrung des Schenkels des U-förmigen Fahrradrahmenaufnehmers angeordnete Ringnut eingreift. Vorteilhaft schließt die Stirnfläche des Schlosses bündig mit der Stirnfläche des Schloßbolzens ab.

Fertigungstechnisch vorteilhaft wird der Fahrradrahmenaufnehmer aus einem gebogenen Bandeisen oder als Schweißkonstruktion aus Profilrohren gebildet.

Weiters ist der Schloßbolzen in beliebigen Fahrradrahmenaufnehmern verriegelbar einsetzbar. Dies ist eine besonders benutzerfreundliche Lösung für den Radfahrer und gleichzeitig auch eine ökonomische Basis für den Betreiber und Erhalter der Fahrradparkplätze. Durch den Verkauf von Schloßbolzen an die Fahrradbesitzer können diese ihr Fahrrad an allen Plätzen, die mit derartigen Fahrradsicherungseinrichtungen versehen sind, optimal gesichert abstellen.

In vorteilhafter Weise dient der Rahmen zur Positionierung der Fahrräder, wenn die Längselemente des Rahmens als Aufnahmeschienen für die Räder der Fahrräder ausgebildet sind.

Wenn jede Aufnahmeschiene mit einem eine Haltestange tragenden Querelement bewegbar verbunden ist, kann die Schwenkachse der Haltestange sowohl parallel zur Längserstreckung des Längselementes als auch unter einem beliebigem Winkel dazu eingestellt werden.

Um das versperrbare Sicherungselement vor Beschädigungen zu sichern, weist dieses versperrbare Sicherungselement nach einer weiteren Ausführungsform einen bogenförmigen, durch einen Schlüssel betätigbaren Riegel auf, der von einer Offen-Position in eine Geschlossen-Position bewegbar ist und dessen vordere und hintere Stirnseite in der Offen-Position mit der Eintritts- und der Austrittsöffnung im Gehäuse des Sicherungselementes deckend abschließt.

Um bei Verlust des Schlüssels die Identität des Fahrradbesitzers überprüfen zu können, weist das Sicherungselement eine Aufnahme für eine codierte Karte auf.

Zur leichteren Handhabung der Vorrichtung zur Sicherung eines Fahrrades ist ein Fahrradständer zur Aufnahme des Vorderrades vorgesehen.

Anhand der Zeichnungen wird die Erfindung näher erläutert. Es zeigt
Fig. 1 das Fahrrad in der gesicherten Abstellposition im Aufriß,
Fig. 2 das Fahrrad in der gesicherten Abstellposition in der Draufsicht,
Fig. 3 die erfindungsgemäße Haltestange mit einer unterhalb der Abstellfläche angeordneten Aufnahme,
Fig. 4 eine weitere Ausführungsform der Aufnahme für die Haltestange,
Fig. 5 die Haltestange in der ausgeschwenkten Position gemäß der Ausführungsform nach Fig. 4,
Fig. 6a, 6b eine mögliche Ausführungsform eines Klemmbügels zur Sicherung der Räder im Aufriß und Grundriß,
Fig. 7a, 7b die mit Klemmbügeln und Haltestange zusammenwirkende Verschiebeeinrichtung in zwei Ansichten,
Fig. 8 eine weitere Ausführungsform des Fahrrades in der gesicherten Abstellposition im Aufriß und im Grundriß,
Fig. 9 mehrere zu einer Baugruppe zusammengefaßte Sicherungsvorrichtungen gemäß Fig. 8,
Fig. 10 eine weitere Ausführungsform der Sicherungsvorrichtung nach Fig. 8,
Fig. 11 das erfindungsgemäße Sicherungselement in einer ersten Ausführungsform,
Fig. 12 das erfindungsgemäße Sicherungselement in einer zweiten Ausführungsform.

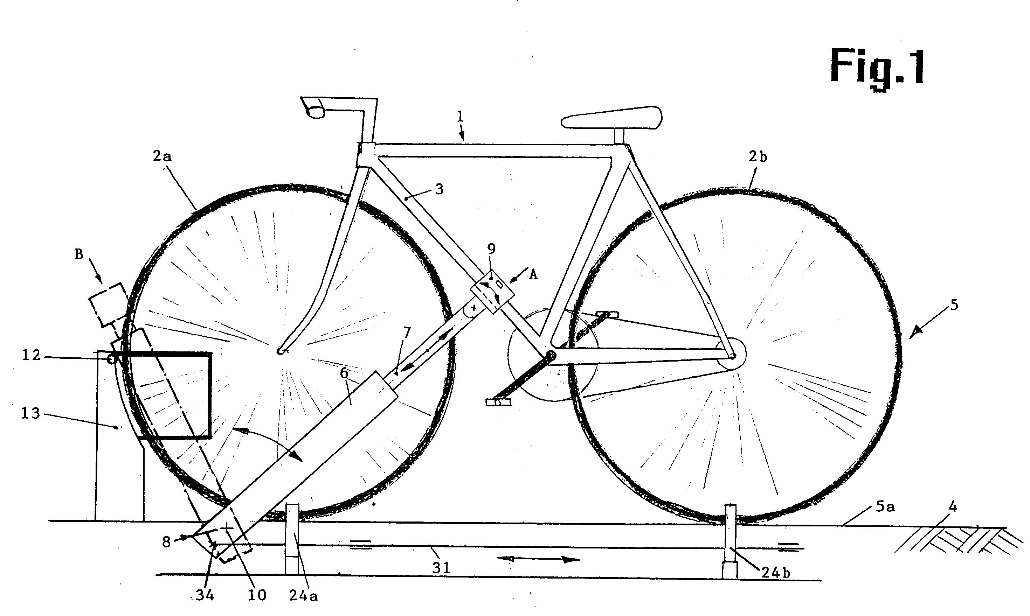

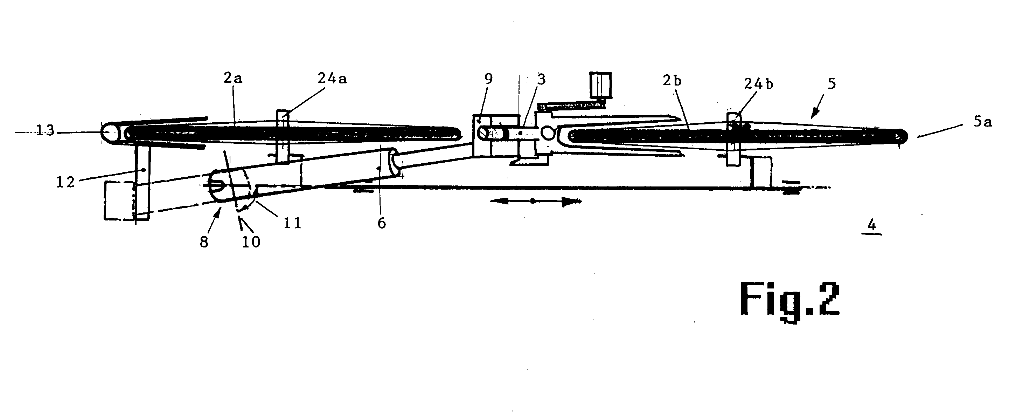

Fig. 1 zeigt ein Fahrrad (1), das durch ein Vorderrad (2a), ein Hinterrad (2b) und den Rahmen (3) schematisch dargestellt ist, auf einer Abstellfläche (4) in einer gesicherten Parkposition (5). Sie ist auf der Abstellfläche durch eine Bodenmarkierung (5a) vorgegeben. Sie kann auch als eine mit dem Vorder- und Hinterrad (2a, 2b) in Kontakt tretende, nicht dargestellte Rinne in der Abstellfläche ausgebildet sein. Die längenveränderbare Haltestange (6) ist als Teleskop (7) ausgebildet und an ihrem einen Ende über eine Aufnahme (8) gelenkig mit der Abstellfläche (4) verbunden und an ihrem anderen Ende ebenfalls gelenkig mit einem versperrbaren Sicherungselement (9) versehen, welches im versperrten Zustand den Rahmen (3) sichernd umfaßt. Die Haltestange (6) ist in Fig. 1 in durchgehenden Linien in ihrer Sicherungsposition (A) dargestellt und befindet sich vor dem Abstellen des Fahrrades in der mit strichpunktierten Linien dargestellten Ausgangsposition (B). Die Schwenkachse (10) der Gelenkverbindung zwischen Aufnahme (8) und Haltestange (6) ist, wie Fig. 2 zeigt, schräg zur Parkposition (5) des Fahrrades angeordnet. Der Winkel (11) zwischen Parkposition (5) und Schwenkachse (10) beträgt vorteilhaft 70° bis 85°. Dadurch ist es möglich, die Haltestange von einer Ausgangsposition (B) seitlich neben dem Vorderrad (2a) zum Rahmen (3) einzuschwenken, ohne daß man das Fahrrad zur Seite schwenken muß. Die Haltestange (6) wird in ihrer Ausgangsposition (B) durch einen Anschlag (12) gehalten. Zur Stabilisierung und leichteren Handhabung der Sicherungseinrichtung ist das Vorderrad (2a) des Fahrrades durch einen gabelartigen Fahrradständer (13) gehalten, der auch den Anschlag (12) trägt.

Die Abstellfläche (4) ist erfindungsgemäß nicht auf die üblicherweise horizontale Parkfläche beschränkt. In großen Wohnanlagen ist es durchaus üblich, einen Fahrradkeller vorzusehen, in dem die Fahrräder an einer Wand hängend abgestellt werden. Hierbei wird das Fahrrad mit dem Vorderrad an einem an der Wand befestigten Haken aufgehängt. An dieser Wand ist auch die erfindungsgemäße Haltestange befestigt. Demzufolge kann die Abstellfläche auch eine im wesentlichen vertikale Wand sein.

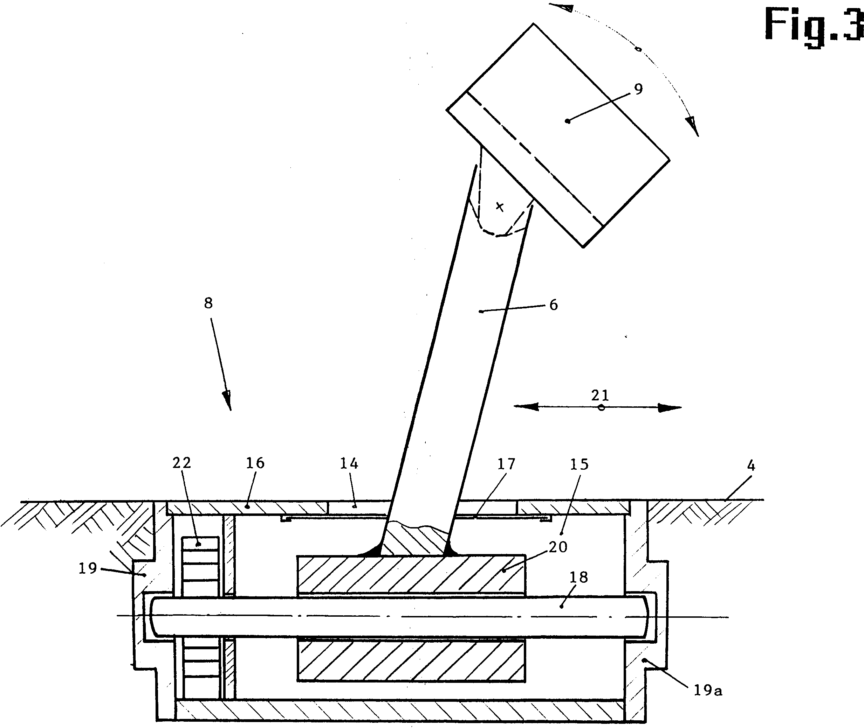

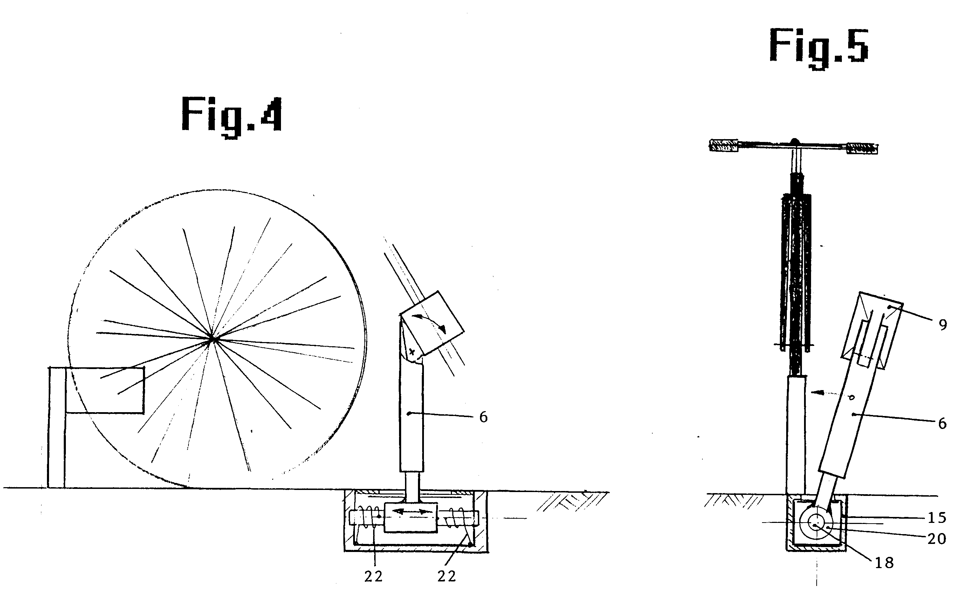

In Fig. 3 ist eine Variante der Aufnahme (8) dargestellt, wobei diese Aufnahme (8) in die Abstellfläche (4) eingelassen ist und die Haltestange (6) durch die schlitzförmige Öffnung (14), der das Gehäuse (15) abschließenden Abdeckplatte (16) ragt. Die schlitzförmige Öffnung (14) ist zusätzlich mit einer Gummidichtung (17) gegen das Eindringen von Schmutz in das Innere des Gehäuses (15) geschützt. Diese Dichtung kann auch aus Metall oder Metallgewebe und außen am Gehäuse (15) angeordnet sein. Die in ihrer Längserstreckung parallel zur Parkposition (5) angeordneten Welle (18) ist in Stirnplatten (19, 19a) des Gehäuses (15) gelagert und trägt die Führungsbuchse (20) der Haltestange (6). Diese ist auf der Welle (18) entsprechend den Pfeilen (21) längsverschiebbar. Die Führungsbuchse (20) ist auf der Welle (18) durch eine nicht dargestellte Paßfeder gegen Verdrehen gesichert. Die Längsverschiebbarkeit ist notwendig, um das Sicherungselement (9) an den zu sichernden Rahmen (3) heranführen zu können. Der Schlitz (14) ist so breit ausgebildet, daß im ausreichenden Maß das seitliche Ausschwenken der Haltestange (6) gewährleistet ist. Vorteilhaft ist der Schlitz (14), dem Bewegungsvorgang angepaßt, L-förmig ausgebildet. Im Gehäuse (15) ist eine Feder (22) angeordnet, die mit ihren Enden an der Welle (18) und dem Gehäuse (15) befestigt ist. Sie hält die Haltestange (6) in einer gewünschten ausgeschwenkten Parkposition. Diese Position ist in Fig. 5 veranschaulicht. In Fig. 4 ist eine Variante mit einer ähnlich wirkenden, als Schraubenfeder ausgebildeten Feder (22) dargestellt. Somit wird die Haltestange (6) durch die Feder(n) (22) in die Ausgangsposition zurückgeschoben. Die Erfindung beschränkt sich jedoch nicht auf diese beiden isolierten Möglichkeiten. Es ist auch möglich, diese als Rückstellfedern wirkenden Federn in einer abgewandelten Ausführungsform so zu kombinieren, daß sowohl die seitliche Einschwenkbewegung als auch die Verschiebebewegung rückgestellt wird.

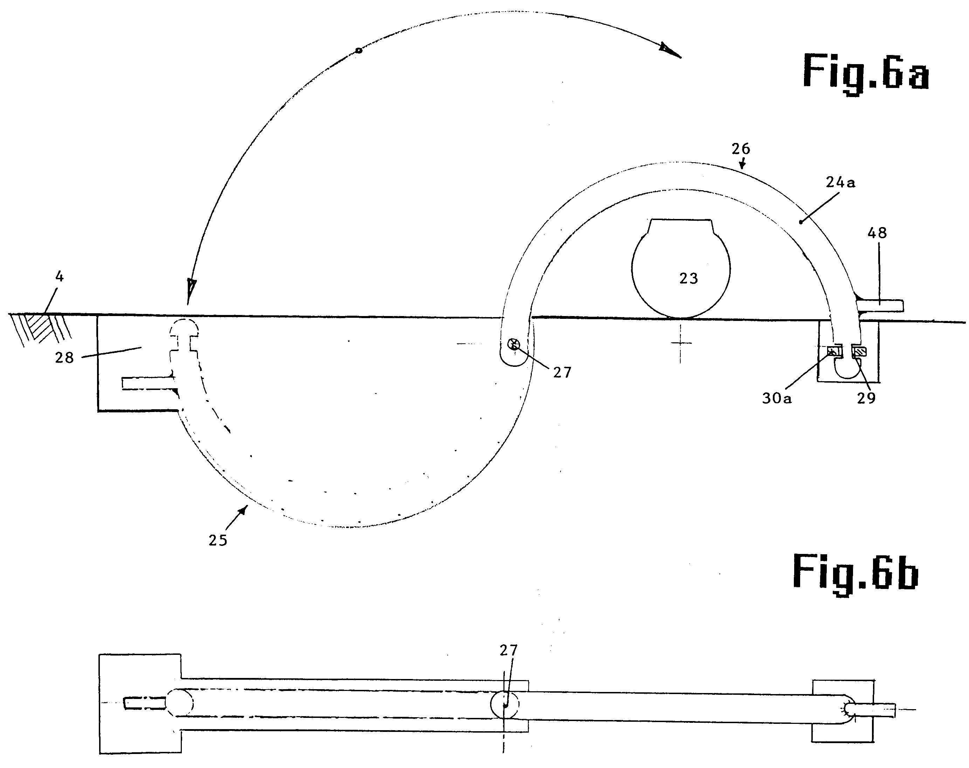

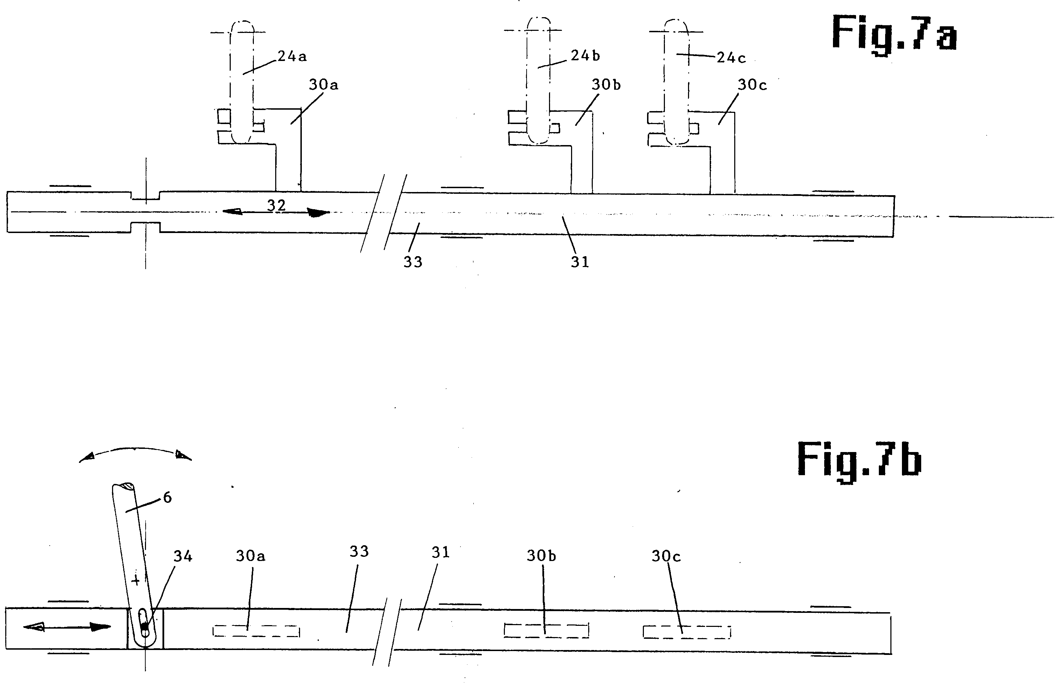

Fig. 6a und 6b zeigen eine Felge und Reifen (23) des Vorder- oder Hinterrades (2a, 2b) umgreifenden Klemmbügels (24a), der von einer Rückzugsposition (25) in eine das Rad sichernde Klemmposition (26) um einen Anlenkpunkt (27) schwenkbar ist. In der Rückzugsposition (25) ist der Klemmbügel (24a) in einer Vertiefung (28) der Abstellfläche (4) versenkt. Der Klemmbügel weist einen Fortsatz (48) auf, mit dem er von Hand betätigt werden kann. In der Klemmposition (26) ist der im wesentlichen halbkreisförmige Klemmbügel (24a), der in einem Endbereich eine Freistellung (29) aufweist, durch diese mit einem gabelförmig ausgebildeten Klemmschuh (30a) in formschlüssiger Verbindung. In den Figuren 7a und 7b ist das mit dem Klemmschuh (30a) zusammenwirkende Verschiebeelement (31) näher dargestellt. Es besteht aus einer in Pfeilrichtung (32) längsverschiebbaren Stange (33), die über den Gelenkpunkt (34) mit der Haltestange (6) verbunden ist.

In Abstand voneinander sind mehrere Klemmschuhe (30a, 30b, 30c) befestigt, die mit korrespondierenden Klemmbügeln (24a, 24b, 24c) zusammenwirken. Ein Klemmbügel (24a) umgreift die Felge des Vorderrades (2a), eine Gruppe von Klemmbügeln (24b, 24c) ist dem Hinterrad (2b) zugeordnet, wobei in Abhängigkeit vom Radstand des Fahrrades ein einzelner Klemmbügel (24b oder 24c) dieser Gruppe, die Felge des Hinterrades (2b) umgreift und mit einem korrespondierenden Klemmschuh (30b oder 30c) zusammenwirkt. Es ist auch möglich, dem Hinterrad (2b) nur einen Klemmbügel (24b) zuzuordnen, der parallel zur Parkposition (5) in Richtung des Pfeiles (47) verschiebbar ist. Dieser Klemmbügel (24b) greift dann in einen Klemmschuh (30b oder 30c) aus der Gruppe der dem Hinterrad zugeordneten Klemmschuhe (30b, 30c) ein.

Eine ausreichende Sicherung des Fahrrades ist durch Fixierung des Rahmens und die zusätzliche Fixierung des Vorderrades gegeben. Um optimalen Schutz zu erlangen, ist es vorteilhaft, die Sicherung auf beide Räder zu erstrecken, wie dies in Fig. 1 und den Figuren 7a und 7b dargestellt ist.

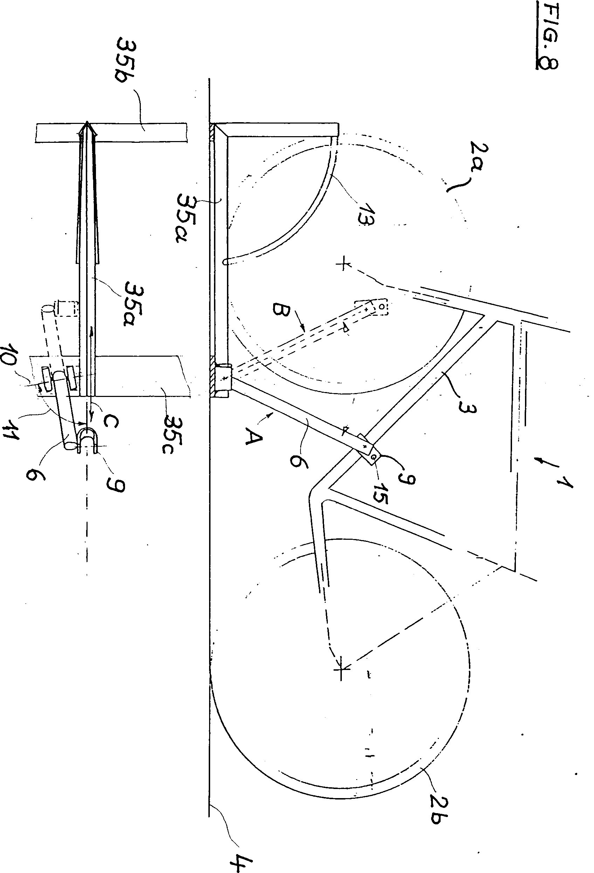

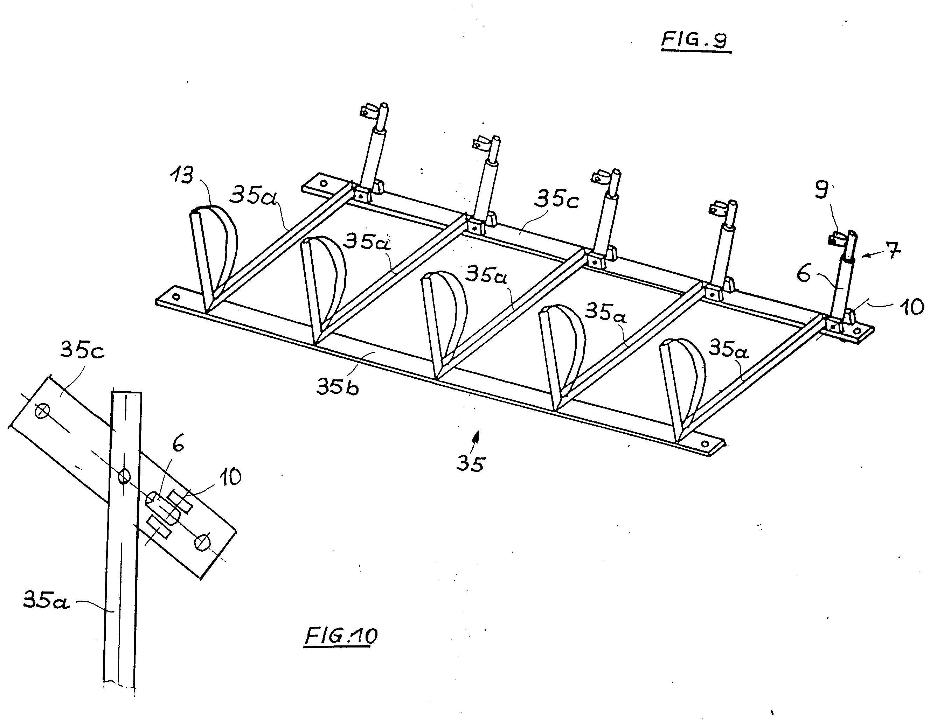

Eine weitere Ausführungsform gemäß Fig. 8 zeigt ein Fahrrad (1), das durch ein Vorderrad (2a), ein Hinterrad (2b) und den Rahmen (3) schematisch dargestellt ist, auf einer Abstellfläche (4) in einer gesicherten Abstellposition mit der erfindungsgemäßen Vorrichtung nach einer weiteren Ausführungsform. Sie besteht, wie im Detail in Fig. 9 für eine Baugruppe dargestellt, aus einem Rahmen (35), der aus mehreren Längselementen (35a) und Querelementen (35b, 35c) gebildet wird. Die Längselemente (35a) sind als mit dem Vorderrad (2a) in Kontakt tretende Aufnahmeschiene ausgebildet. Diese können soweit verlängert ausgebildet sein, daß auch das Hinterrad (2b) aufgenommen wird. Die Haltestange (6) ist an ihrem einen Ende am Querelement (35c) des Rahmens (35) angelenkt und an ihrem anderen Ende ebenfalls gelenkig mit einem versperrbaren Sicherungselement (9) versehen, welches im versperrten Zustand des Rahmens (3) sichernd umfaßt. Die Haltestange (6) ist in Fig. 8 in durchgehenden Linien in ihrer Sicherungsposition (A) dargestellt und befindet sich vor dem Abstellen des Fahrrades in der mit strichlierten Linien dargestellten Ausgangsposition (B). Die Haltestange (6) ist als Teleskop (7) ausgebildet und ermöglicht so das leichte Zusammenführen des Fahrradrahmens (3) mit dem Sicherungselement (9). Die Schwenkachse (10) ist, wie Fig. 8 zeigt, schräg zur Längserstreckung (Pfeil C) des Längselementes (35a) angeordnet. Der Winkel (11) zwischen Schwenkachse (10) und der Längserstreckung des Längselementes (35a) beträgt vorteilhaft 70° bis 85°. Dadurch ist es möglich, die Haltestange von einer Ausgangsposition (B) seitlich neben dem Vorderrad (2a) zum Rahmenteil (3) einzuschwenken, ohne daß man das Fahrrad zur Seite schwenken muß. Die Haltestange (6) wird in ihrer Ausgangsposition (B) durch einen nicht dargestellten Anschlag gehalten. Zur Stabilisierung und leichteren Handhabung der Sicherungseinrichtung ist das Vorderrad (2a) des Fahrrades durch einen gabelartigen Fahrradständer (13) gehalten.

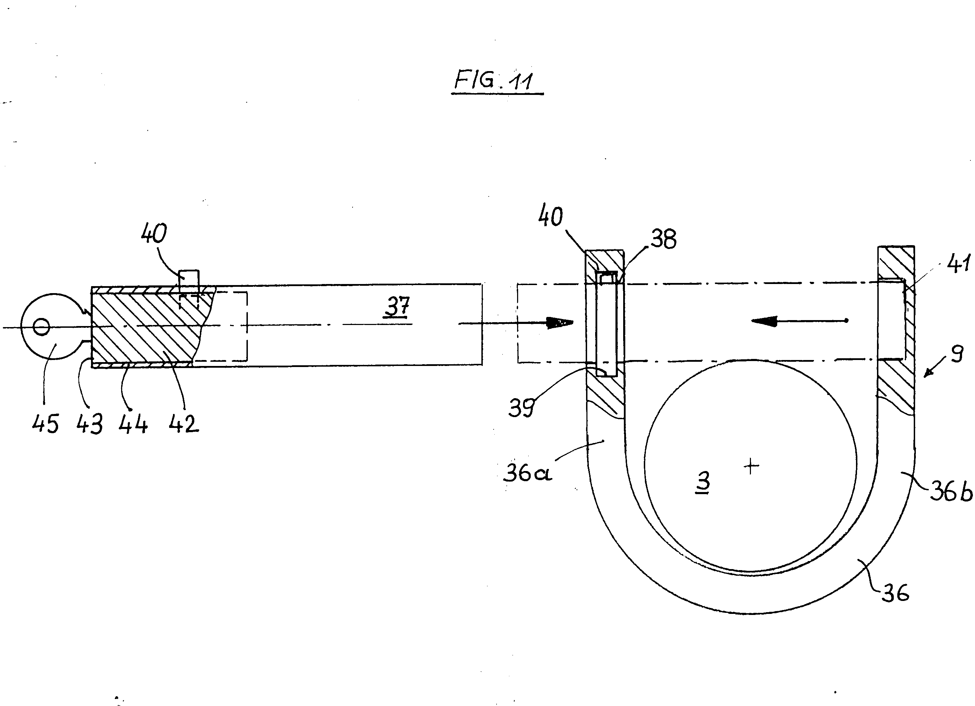

Die Sicherungseinrichtung muß jedoch nicht, wie in Fig. 9 dargestellt, als Baugruppe errichtet werden, es ist auch möglich, Einzelelemente bestehend aus einem Längselement (36a) und zwei Querelementen (35b, 35c) zu bilden. In Fig. 10 ist diese Möglichkeit angedeutet, wobei das Querelement (35c) gegenüber dem Längselement (35a) schräg gestellt ist. Die Verbindung dieser beiden Teile ermöglicht eine Schwenkbewegung des Querelementes (35c), wodurch es möglich ist, die Schwenkachse (10) der Haltestange (6) sowohl parallel zur Längserstreckung der Längselemente (35a) des Rahmens als auch unter einem beliebigem Winkel einzustellen.

Der Rahmen (35) kann in einfacher Weise auf einer Abstellfläche (4) ohne besondere Befestigung positioniert oder aber mit Fundamentschrauben lösbar befestigt werden.

Die Abstellfläche (4) ist erfindungsgemäß nicht auf die üblicherweise horizontale Abstellfläche beschränkt. In großen Wohnanlagen ist es durchaus üblich, einen Fahrradkeller vorzusehen, in dem die Fahrräder an einer Wand hängend abgestellt werden. Hiebei wird das Fahrrad mit dem Vorderrad an einem an der Wand befestigten Haken aufgehängt. An dieser Wand ist auch die erfindungsgemäße Haltestange befestigt. Demzufolge kann die Abstellfläche auch eine im wesentlichen vertikale Wand sein.

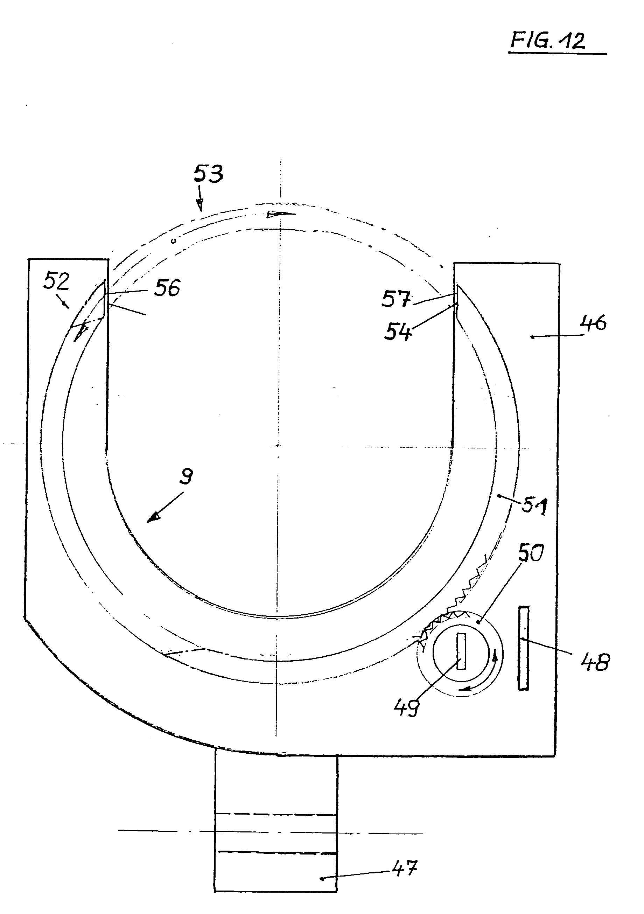

In Fig. 11 ist das den Rahmen (3) des Fahrrades (1) umgreifende Sicherungselement (9) näher erläutert. Es besteht aus einem U-fömrigen Fahrradrahmenaufnehmer (36), dessen beide Schenkel (36a, 36b) im abgesperrten Zustand den Schloßbolzen (37) aufnehmen. Der Schenkel (36a) weist eine Durchgangsbohrung (38) mit einer mittig angeordneten umlaufenden Ringnut (39) auf; der Schenkel (36b) ist mit einem Sackloch (41) versehen. In den Schloßbolzen (37) ist ein Schloß (42) integriert, wobei der Sperriegel (40) die Mantelfläche (37) durchsetzt und im versperrten Zustand in die Ringnut (39) des Schenkels (36a) eingreift und den Fahrradrahmenaufnehmer (36) verriegelt. Hierbei durchsetzt der Schloßbolzen (37) den Schenkel (36a) des U-förmigen Fahrradrahmenaufnehmers (36) zur Gänze und ragt in das Sackloch (41) des Schenkels (36b) des U-förmigen Fahrradrahmenaufnehmers (36) hinein. Die Stirnfläche (43) des Schlosses (42) schließt fluchtend mit der Stirnfläche (44) des Schloßbolzens (37) ab.

In Fig. 2 ist das Sicherungselement (9) mit durchgehenden Linien vor dem Zusammenbau dargestellt. Nachdem der Fahrradrahmen (3) in den Fahrradrahmenaufnehmer (36) eingefädelt ist, wird der Schloßbolzen (37) in Pfeilrichtung in die strichpunktierte Position gebracht und mit dem Schlüssel (45) verriegelt. Der Schlüssel (45) kann dann abgezogen werden und verbleibt beim Radfahrer.

Nach dem Aufsperren des Schlosses wird der Schloßbolzen (37) aus dem Fahrradrahmenaufnehmer (36) entfernt und verbleibt samt Schlüssel beim Radfahrer, der ihn beim nächsten Halt bei einem mit derartigem System ausgestatteten Fahrradständer wieder einsetzen kann.

Die Erfindung beschränkt sich nicht auf die dargestellte Ausführungsform. Insbesondere der Fahrradrahmenaufnehmer (36) kann in verschiedenen Formen hergestellt werden, die jedoch alle den Rahmen (3) des Fahrrades umfassen müssen. Der Fahrradrahmenaufnehmer kann aus einem gebogenen Bandeisen oder als Schweißkonstruktion aus Profilrohren gebildet sein.

In Fig. 12 ist eine vorteilhafte Ausgestaltung des Sicherungselementes (9) in einer weiteren Ausführungsform näher dargestellt. Das Sicherungselement weist ein im wesentlichen U-förmiges Gehäuse (46) auf, welches über ein Gelenk (47) mit der Haltestange (6) verbunden ist. Das Gehäuse weist einen Schlitz (48) zum Einwerfen einer Münze oder zum Einführen einer codierten Identitätskarte auf, die einen nicht dargestellten Verriegelungsmechanismus zum Absperren des Sicherungselementes aktiviert. Das Sicherungselement weist weiters eine Schlüsselaufnahme (49) auf, wobei mit dem angesteckten Schlüssel über einen, mit ihm bewegten verzahnten Ring (50), ein bogenförmiger, ebenfalls verzahnter Riegel (51) von einer im Gehäuse (46) liegenden, mit durchgehenden Linien dargestellter Offen-Position (52), in eine den Rahmen (3) umschließenden, mit strichpunktierten Linien dargestellten Geschlossen-Position (53) und umgekehrt bewegbar ist. Die Austrittsöffnungen (54) des Riegels und die gegenüberliegende Eintrittsöffnung (55) des Riegels im Gehäuse (46) ist in der Offen-Position (52) von den beiden Stirnseiten (56, 57) des Riegels verschlossen. Der die Eintritts- und Austrittsöffnungen deckend abschließende Riegel (51) verhindert das Einbringen von Fremdkörpern in das Innere des Sicherungselementes.

Der vom Radfahrer vorzunehmende Sicherungsvorgang ist folgender: Der Radfahrer bringt das Fahrrad in die durch Bodenmarkierungen und/oder den Fahrradständer (13) vorgegebenen Parkposition (5). Er greift nach der Haltestange (6), zieht sie von der Ausgangsposition B in die Sicherungsposition A, wobei das U-förmige Gehäuse (46) des Sicherungselementes (9) den Rahmen (3) aufnimmt. Nach Einwurf der vorgeschriebenen Münze oder dem Einführen einer codierten Identitätskarte sperrt er das Sicherungselement (9) ab und zieht den Schlüssel ab. Bei Beendigung des Parkvorganges sperrt er wieder auf, schiebt die Haltestange (6) zurück in die Ausgangsposition B. Wenn zur zusätzlichen Sicherung des Fahrrades Klemmbügel (24a, 24b, 24c) vorhanden sind, klappt er den/die Klemmbügel (24a, 24b oder 24c) über die Felgen von Vorder- und Hinterrad, bevor er die Haltestange (6) in die Sicherungsposition A bewegt.

Gleichzeitig mit dem Einschwenken der Haltestange (6) greift der Klemmschuh (30a, 30b, 30c) in die Freistellung (29) des Klemmbügels (24a, 24b, 24c), wobei durch einen Bewegungsvorgang eine Sicherung an mehreren Stellen erfolgt. Beim Lösen verläuft der Bewegungsvorgang umgekehrt.

Nach dem Einwurf einer Münze oder dem Einbringen der Identitätskarte und dem dadurch erfolgten Absperren, kann der Schlüssel abgezogen und vom Fahrradbesitzer mitgenommen werden. Nach erfolgtem Aufsperren des Sicherungselementes wird die Identitätskarte wieder ausgeworfen.

Bei Verlust des Schlüssels kann anhand der Identitätskarte das Fahrrad dem rechtmäßigen Besitzer übergeben werden. Hierzu ist es notwendig, daß der Betreiber der Abstellfläche über einen Generalschlüssel verfügt. Besonders vorteilhaft für den Fahrradtouristen ist es, wenn die Abstellflächen mit Aufbewahrungskästen für Handgepäck, Rucksäcke und dgl. ausgestattet ist.

## Patentansprüche

1. Vorrichtung zur Sicherung von Fahrrädern und fahrradähnlichen einspurigen Fahrzeugen auf dafür vorgesehenen Abstellflächen (4) in einer Parkposition (5) mit einer Haltestange (6), die mit ihrem einen Ende gelenkig mit einer fest auf der Abstellfläche (4) verankerten Aufnahme (8) verbunden ist und deren gegenüberliegendes Ende mit einem versperrbaren Sicherungselement (9) versehen ist, **dadurch** **gekennzeichnet** , daß die gelenkige Verbindung zwischen Haltestange (6) und Aufnahme (8) im Nahbereich der Abstellfläche (4) angeordnet ist, daß die Haltestange (6) längenveränderbar ausgebildet ist und daß das Sicherungselement (9) gelenkig mit der Haltestange (6) verbunden ist.

2. Vorrichtung nach Anspruch 1, **dadurch** **gekennzeichnet** , daß die Schwenkachse (10) der Gelenkverbindung zwischen Aufnahme (8) und Haltestange (6) schräg zur Parkposition (5) des Fahrrades angeordnet ist.

3. Vorrichtung nach Anspruch 2, **dadurch** **gekennzeichnet** , daß der Winkel (11) zwischen Parkposition (5) und Schwenkachse (10) 70° bis 85° beträgt.

4. Vorrichtung nach einem der vorhergehenden Ansprüche, **dadurch gekennzeichnet**, daß die Haltestange (6) als Teleskop (7) ausgebildet ist.

5. Vorrichtung zur Sicherung von Fahrrädern und fahrradähnlichen einspurigen Fahrzeugen auf dafür vorgesehenen Abstellflächen (4) in einer Parkposition mit einer Haltestange (6), die mit ihrem einen Ende gelenkig mit einer fest auf der Abstellfläche (4) verankerten Aufnahme (8) verbunden ist und deren gegenüberliegendes Ende mit einem versperrbaren Sicherungselement (9) versehen ist, **dadurch** **gekennzeichnet** , daß die gelenkige Verbindung zwischen Haltestange (6) und Aufnahme (8) im Nahbereich der Abstellfläche (4) angeordnet ist, daß die Haltestange (6) in der Aufnahme (8) parallel zur Parkposition (5) verschiebbar und quer zur Parkposition (5) verschwenkbar ist und daß das Sicherungselement (9) gelenkig mit der Haltestange (6) verbunden ist.

6. Vorrichtung nach Anspruch 5, **dadurch** **gekennzeichnet**, daß die gelenkige Verbindung zwischen Haltestange (6) und Aufnahme (8) aus der im Gehäuse (15) gelagerten, parallel zur Parkposition (5) liegenden Welle (18) und der an der Welle (18) längsverschiebbaren Führungsbuchse (20) der Haltestange (6) und mindestens einer zwischen dem Gehäuse (15) und der Welle (18) bzw. dem Gehäuse (15) und der Führungsbuchse (20) wirkenden Feder (22) besteht.

7. Vorrichtung nach einem der vorhergehenden Ansprüche, **dadurch gekennzeichnet**, daß die Haltestange (6) mit einem Verschiebeelement (31) gelenkig verbunden ist, das mit mindestens einem Klemmbügel (24a) zur Sicherung mindestens eines Rades des Fahrrades zusammenwirkt.

8. Vorrichtung nach Anspruch 1, **dadurch** **gekennzeichnet** , daß das Verschiebeelement (31) mindestens einen Klemmschuh (30a) trägt, der mit einer Freistellung (29) am Klemmbügel (24a) in Verbindung bringbar ist.

9. Vorrichtung nach Anspruch 7 und/oder 8, **dadurch gekennzeichnet**, daß ein Klemmbügel (24a) zur Fixierung eines Rades des Fahrrades in seiner Lage zur Parkposition (5) des Fahrrades festliegt, der zweite auf das zweite Rad des Fahrrades wirkende Klemmbügel (24b) im Abstand zum ersten Klemmbügel (24a) verschiebbar angeordnet ist.

10. Vorrichtung nach Anspruch 7 und/oder 8, **dadurch gekennzeichnet** , daß ein Klemmbügel (24a) zur Fixierung eines Rades des Fahrrades in seiner Lage zur Parkposition (5) des Fahrrades festliegt und eine Gruppe von Klemmbügeln (24b, 24c) im Abstand zum ersten Klemmbügel (24a) angeordnet ist, wobei ein ausgewählter, dem Radstand am besten entsprechender Klemmbügel (24b oder 24c) mit einem der Klemmschuhe (30b oder 30c) aus einer Gruppe von Klemmschuhen (30b, 30c) zusammenwirkt.

11. Vorrichtung zur Sicherung von Fahrrädern und fahrradähnlichen einspurigen Fahrzeugen gegen Diebstahl, bestehend aus einem aus mindestens einem Längselement (5a) und Querelement (5b, 5c) gebildeten Rahmen (5), mindestens einer Haltestange (6), die mit ihrem einen Ende am Rahmen (5) schwenkbar befestigt und an ihrem anderen Ende mit einem versperrbaren Sicherungselement (9) versehen ist, **dadurch** **gekennzeichnet** , daß die Haltestange (6) längenveränderbar ausgebildet und das Sicherungselement (9) gelenkig mit der Haltestange (6) verbunden ist.

12. Vorrichtung nach Anspruch 11, **dadurch** **gekennzeichnet**, daß die Schwenkachse (10) der Haltestange (6) im wesentlichen parallel zur Längserstreckung (Pfeil C) der Längselemente (5a) des Rahmens (5) verläuft.

13. Vorrichtung nach Anspruch 11, **dadurch** **gekennzeichnet**, daß die Schwenkachse (10) der Haltestange (6) schräg zur Längserstreckung (Pfeil C) der Längselemente (5a) des Rahmens (5) verläuft.

14. Vorrichtung nach Anspruch 13, **dadurch** **gekennzeichnet**, daß der Winkel (11) zwischen Schwenkachse (10) und der Richtung der Längserstreckung der Längselemente 70° bis 85° beträgt.

15. Vorrichtung nach einem der vorhergehenden Ansprüche, **dadurch** **gekennzeichnet**, daß das Sicherungselement (9) von einem im wesentlichen U-förmigen Fahrradrahmenaufnehmer (36) und einem die U-förmige Öffnung des Fahrradrahmenaufnehmers (36) verschließenden Schloßbolzen (37) gebildet ist.

16. Vorrichtung nach Anspruch 15, **dadurch** **gekennzeichnet**, daß der Schloßbolzen (37) den Schenkel (36a) des U-förmigen Fahrradrahmenaufnehmers (36) zur Gänze durchsetzt und in das Sackloch (41) des zweiten Schenkels (35b) des U-förmigen Fahrradrahmenaufnehmers (36) hineinragt.

17. Vorrichtung nach Anspruch 16, **dadurch** **gekennzeichnet**, daß im versperrten Zustand der Sperriegel (40) des in den Schloßbolzen (37) integrierten Schlosses (42) in eine im wesentlichen mittig in der Mantelfläche der Durchgangsbohrung (38) des Schenkels (36a) des U-förmigen Fahrradrahmenaufnehmers (36) angeordneten Ringnut (39) eingreift.

18. Vorrichtung nach Anspruch 17, **dadurch** **gekennzeichnet**, daß die Stirnfläche (43) des Schlosses (42) bündig mit der Stirnfläche (44) des Schloßbolzens (37) abschließt.

19. Vorrichtung nach einem der Ansprüche 16 bis 18, **dadurch gekennzeichnet**, daß der Fahrradrahmenaufnehmer (36) aus einem gebogenen Bandeisen gebildet ist.

20. Vorrichtung nach einem der Ansprüche 16 bis 18, **dadurch gekennzeichnet**, daß der Fahrradrahmenaufnehmer (36) als Schweißkonstruktion aus Profilrohren gebildet ist.

21. Vorrichtung nach einem oder mehreren der vorhergehenden Ansprüche, **dadurch** **gekennzeichnet**, daß der Schloßbolzen (37) in beliebigen Fahrradrahmenaufnehmern (36) verriegelbar einsetzbar ist.

22. Vorrichtung nach einem oder mehreren der Ansprüche 11 bis 21, **dadurch** **gekennzeichnet**, daß die Längselemente (5a) des Rahmens als Aufnahmeschienen für das Fahrrad ausgebildet sind.

23. Vorrichtung nach Anspruch 22, **dadurch** **gekennzeichnet**, daß jede Aufnahmeschiene (5a) mit einem eine Haltestange (6) tragenden Querelement (5c) bewegbar verbunden ist.

24. Vorrichtung nach einem der Ansprüche 1 bis 14, **dadurch gekennzeichnet**, daß das versperrbare Sicherungselement (9) einen bogenförmigen, durch einen Schlüssel betätigbaren Riegel (51) enthält, der von einer Offen-Position (52) in eine Geschlossen-Position (53) bewegbar ist und dessen vordere und hintere Stirnseite (56, 57) in der Offen-Position (52) mit der Eintrittsöffnung (55) und der Austrittsöffnung (54) im Gehäuse (46) des Sicherungselementes (9) deckend abschließt.

25. Vorrichtung nach Anspruch 24, **dadurch** **gekennzeichnet** , daß das versperrbare Sicherungselement (9) eine Aufnahme (48) für eine codierte Karte aufweist.

26. Vorrichtung nach einem der vorhergehenden Ansprüche, **dadurch** **gekennzeichnet**, daß ein Fahrradständer (13) zur Aufnahme des Vorderrades (2a) vorgesehen ist.
